# FASCICULE DE BREVET EUROPEEN

(11) **EP 0 621 733 B1**
(45) Date de publication et mention de la délivrance du brevet: **31.10.2001**
(21) Numéro de dépôt: 94420098.9
(22) Date de dépôt: 23.03.1994
(51) Int. Cl.: H04Q 1/14, H01T 1/14, H01T 4/06

(54) **Module de protection enfichable pour module d'interconnexion rapide de lignes téléphoniques**
Steckbarer Schutzmodul für Module für schnelle Verbindung von Fernsprechleitungen
Pluggable protection module for module for fast interconnection of telephone lines

(30) Priorité: 23.04.1993 FR 9305049
(43) Date de publication de la demande: 26.10.1994
(73) Titulaire: POUYET INTERNATIONAL, F-92400 Ivry sur Seine (FR)
(72) Inventeur: Bonvallat, Pierre, F-74300 Cluses (FR)
(74) Mandataire: Wind, Jacques

(56) Documents cités:
- EP-A- 0 130 403
- EP-A- 0 389 843
- DE-B- 2 642 779
- DE-C- 3 921 225
- FR-A- 2 662 042
- US-A- 4 907 120
- US-A- 5 008 772

## Description

La présente invention se rapporte à un module de protection enfichable pour module d'interconnexion rapide de lignes téléphoniques.

Le FR-A-2.662.042 décrit une réglette à coupure recevant un module de protection enfichable, qui présente un réceptacle logeant un parafoudre tripolaire entre des contacts élastiques. Une barre de court-circuit est maintenue, armée par deux pattes élastiques, à courte distance des deux électrodes de ligne du parafoudre. En cas d'échauffement, les deux soudures fondent, ce qui libère la barre de court-circuit.

Le DE-C-39.21.225 décrit un module enfichable comportant un boîtier, dont chaque réceptacle reçoit des parafoudres tripolaires à fiches enfichables. Les réceptacles s'ouvrent par le dessus. L'électrode de masse de chaque parafoudre est connectée à la plaque de masse par sa fiche et la cosse réceptrice correspondante. Les deux autres électrodes sont de même façon reliées aux deux contacts de ligne respectifs. Le parafoudre comporte une pastille fusible qui est pressée contre son électrode médiane par un ressort qui porte une barre de court-circuit, qui agit en cas de fusion de la pastille lors de l'amorçage du parafoudre. Le ressort et la pastille font partie du parafoudre.

Le EP-A-0.130.403 décrit un module de protection non-enfichable comprenant, un parafoudre tripolaire, à électrodes et cosses enfichables, prévu dans un réceptacle. Deux lames de ressort sont établies de part et d'autre et sur le dessus. Elles s'appuient sur les deux coupelles de ligne, et une cale formant pastille fusible en plomb les maintient à courte distance de l'électrode de masse annulaire. La cale fusible est pressée, par le ressort, sur l'électrode correspondante. Un contact réalise le court-circuit quant la pastille fond sous l'effet de la chaleur dégagée par le parafoudre.

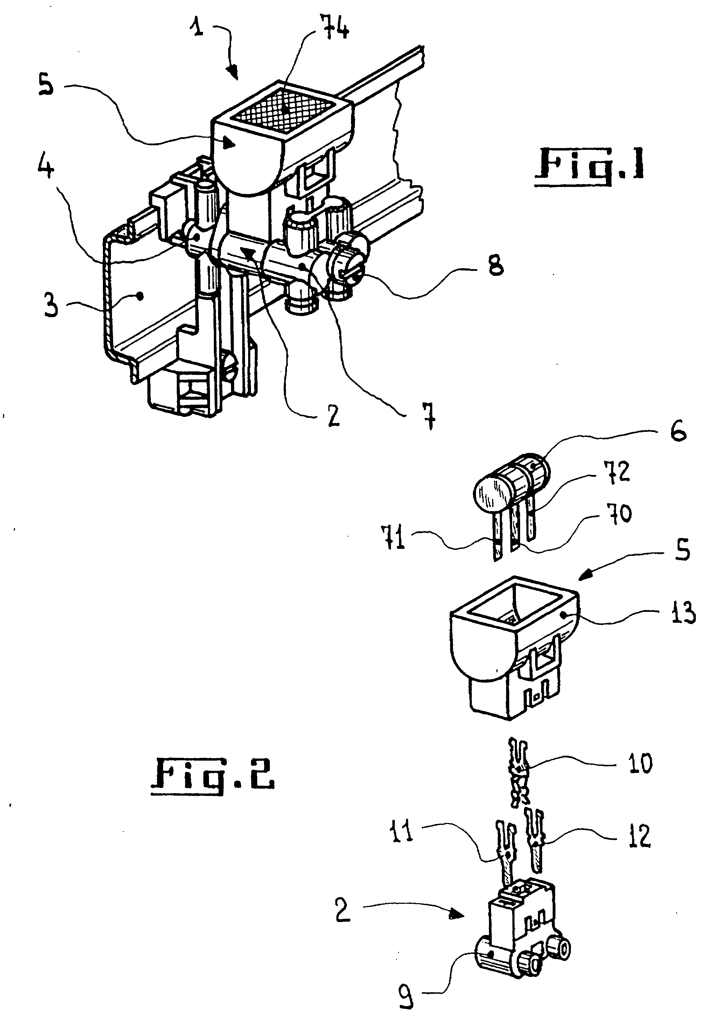

La figure 1 jointe est une vue en perspective d'un module 1 d'interconnexion rapide de lignes téléphoniques à protection contre la foudre ou autres surtensions, qui est actuellement largement diffusé par la Société Demanderesse, tandis que la figure 2 est une perspective éclatée de sa demi-douille intermédiaire 2 formant dispositif de protection contre la foudre ou autres surtensions.

Il est rappelé brièvement ici que ce module 1 se monte sur un rail métallique préférentiellement normalisé 3 qui constitue une barre de connexion de masse électrique, et qu'il est constitué de trois demi-douilles ou bagues superposées :
- Une demi-douille inférieure 4 qui reçoit la première paire de fils téléphoniques,
- Une demi-douille intermédiaire 2, dite "bague de protection" dans laquelle vient s'enficher un module de protection 5 contenant un parafoudre, ou "parasurtension", tripolaire 6, et
- Une demi-douille supérieure 7 qui reçoit la deuxième paire de fils téléphoniques.

Une vis médiane 8 traverse l'ensemble du module 1 et sert à la fois de connexion de masse et de dispositif de serrage assurant la cohésion des trois demi-douilles ainsi qu'entraînant les connexions auto-dénudantes des quatre fils de ligne.

La bague de protection 2 se compose (Figure 2) d'un corps 9 en matière plastique qui emprisonne fermement trois contacts "lyre", dont un double contact-lyre central 10 qui emprisonne le corps de la vis 8 et est donc le contact de masse, et deux contacts-lyre latéraux 11 et 12 qui sont connectés aux deux bornes de ligne du module.

Le module de protection enfichable 5 se compose d'un corps 13 en matière plastique qui forme réceptâcle pour un parafoudre ou parasurtension 6.

Ce parasurtension 6 est un parafoudre tripolaire du commerce, sur les trois électrodes duquel on a soudé trois pattes rigides de contact 70,71,72 qui sont prévues pour traverser le fond du réceptacle 13 de façon à s'enficher respectivement dans les contacts 10,11,12 quand le module 5 est enfiché sur sa bague réceptrice 2.

Après montage du module de protection 5, le parasurtension 6 est noyé dans une résine polyuréthanne 74 (Figure 1).

Ce dispositif connu présente quelques inconvénients :

Le fait que le parasurtension soit noyé dans une résine polyuréthanne très rigide nécessite d'enrober ce parasurtension par une couche d'un produit souple, tel qu'un produit à base de silicone, pour permettre au dispositif fusible de limitation thermique qui est classiquement interposé entre la masse du parafoudre et au moins une électrode de ligne, de jouer pleinement son rôle malgré la présence du polyuréthanne qui est rigide. Cette disposition pénalise le prix de revient de ce module de protection.

Un parasurtension sur les électrodes duquel sont soudées des pattes de contact n'est pas un produit du commerce. En conséquence, il n'est pas possible à l'utilisateur de remplacer le parafoudre de son module de protection enfichable après un fonctionnement de ce parafoudre ou parasurtension : il doit changer l'ensemble du module, ce qui est assez onéreux.

En outre ce dispositif connu est prévu pour recevoir un parasurtension de dimensions bien déterminées, ce qui est peu commode car il est alors nécessaire de toujours s'approvisionner chez le même fabricant de parasurtensions.

Enfin, ce même dispositif connu a pour autre inconvénient de ne pas se prêter à une fabrication automatique robotisée.

L'invention vise à remédier à ces inconvénients. Elle se rapporte à cet effet à un module de protection enfichable sur la bague de protection réceptrice d'un module d'interconnexion rapide de lignes téléphoniques, cette bague présentant trois bornes de connexion, par enfichage, à ce module de protection dont une borne de masse de deux bornes de ligne, ce module de protection contenant un parafoudre ou "parasurtension" tripolaire de corps cylindrique et pourvu d'une électrode métallique de masse, médiane et annulaire, et de deux électrodes métalliques de ligne formant les deux faces transversales respectives d'extrémité du cylindre, et étant conçu pour s'enficher sur cette bague réceptrice de manière à connecter électriquement alors respectivement les deux électrodes d'extrémités du parasurtension aux deux bornes de ligne et l'électrode annulaire médiane de ce parasurtension à la borne de masse, ce module de protection enfichable étant caractérisé :
. en ce qu'il comporte, dans un réceptacle de réception du parasurtension, trois contacts métalliques élastiques dont un contact médian de connexion de masse dont la section transversale a une forme de fourchette à deux dents qui est prévue pour recevoir, entre ces deux dents, l'électrode de masse annulaire médiane du parasurtension, et deux contacts latéraux de connexion de ligne qui sont respectivement positionnés de part et d'autre de ce contact de masse et symétriquement par rapport au plan transversal médian de celui-ci, chacun de ces deux contact étant prévu pour prendre appui, de manière élastique, respectivement contre les deux électrodes de ligne du parasurtension,
. en ce que ledit réceptacle est de dimensions intérieures légèrement supérieures aux dimensions moyennes d'un parasurtension du commerce, de telle sorte que, compte tenu du débattement permis par l'élasticité de ces trois contacts élastiques, ce réceptâcle est apte à recevoir des parasurtensions du commerce, dont les dimensions extérieures peuvent être légèrement différentes de l'un à l'autre,
. en ce que ledit contact élastique médian de connexion de masse a une forme de berceau qui comporte, dans le sens longitudinal parallèle à l'axe du parasurtension et de part et d'autre de chacune des deux pattes élastiques de connexion de masse qui forment les deux dents de ladite fourchette, respectivement deux pattes métalliques élastiques supplémentaires qui sont conformées pour venir respectivement prendre appui sur chacune des deux électrodes de ligne du parasurtension, une cale isolante en matériau thermofusible étant en outre prévue pour venir s'insérer entre chacune de ces quatre pattes élastiques supplémentaires et le corps du parasurtension afin de normalement ménager un intervalle électriquement isolant entre chaque patte supplémentaire et son électrode de ligne conjuguée du parasurtension, cet intervalle d'isolement venant à être supprimé lorsque, le parasurtension venant à fonctionner, cette cale isolante fond alors sous l'effet de la chaleur,
. et en ce que cette cale thermofusible comporte quatre pattes de calage qui sont respectivement aptes à venir s'encastrer , lorsque cette cale est mise en place, entre chacune desdites pattes métalliques élastiques supplémentaires.

Préférentiellement, chacun de ces deux contacts élastiques de ligne comporte deux lamelles élastiques de contact qui sont écartées l'une de l'autre et conformées pour prendre appui sur la partie périphérique de la face transversale métallique d'extrémité du cylindre formé par le corps du parasurtension, c'est-à-dire sur la partie périphérique de face transversale de l'électrode de ligne correspondante du parasurtension, de sorte que ce réceptâcle peut recevoir aussi bien des parasurtensions du commerce pour lesquelles cette face transversale métallique d'extrémité est rigoureusement plane que des parasurtensions du commerce pour lesquels cette face transversale métallique d'extrémité possède une partie centrale creuse.

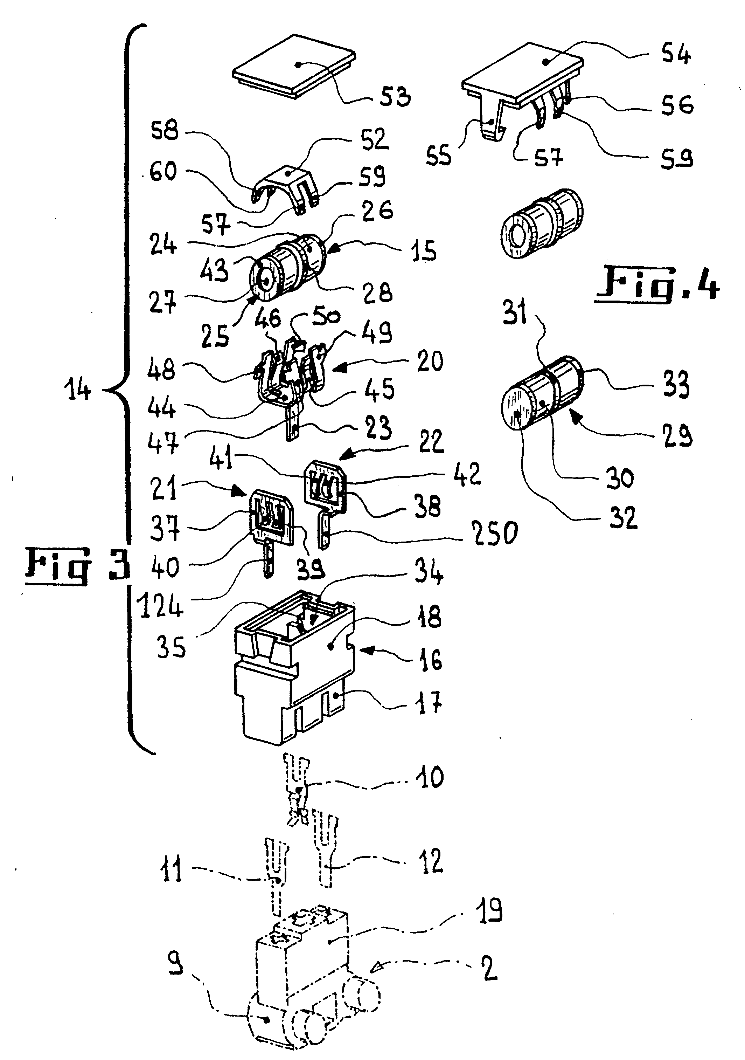

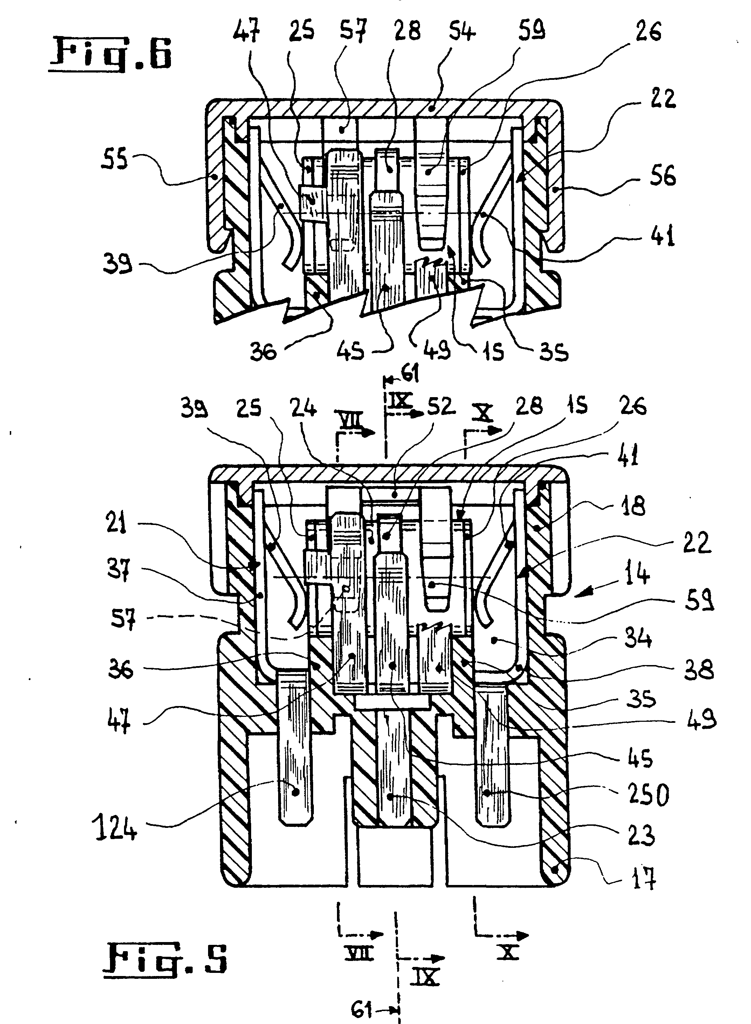

De toute façon, l'invention sera bien comprise, et tous ses avantages et caractéristiques ressortiront mieux, lors de la description suivante d'un exemple non limitatif de réalisation, en référence au dessin schématique annexé dans lequel :
. Figure 3 est une vue en perspective éclatée de ce module de protection enfichable sur bague de protection d'un module d'interconnexion de lignes téléphoniques ;
. Figure 4 illustre une variante de réalisation ;
. Figure 5 montre le module de la figure 3 tout monté, selon une vue d'ensemble en coupe longitudinale :

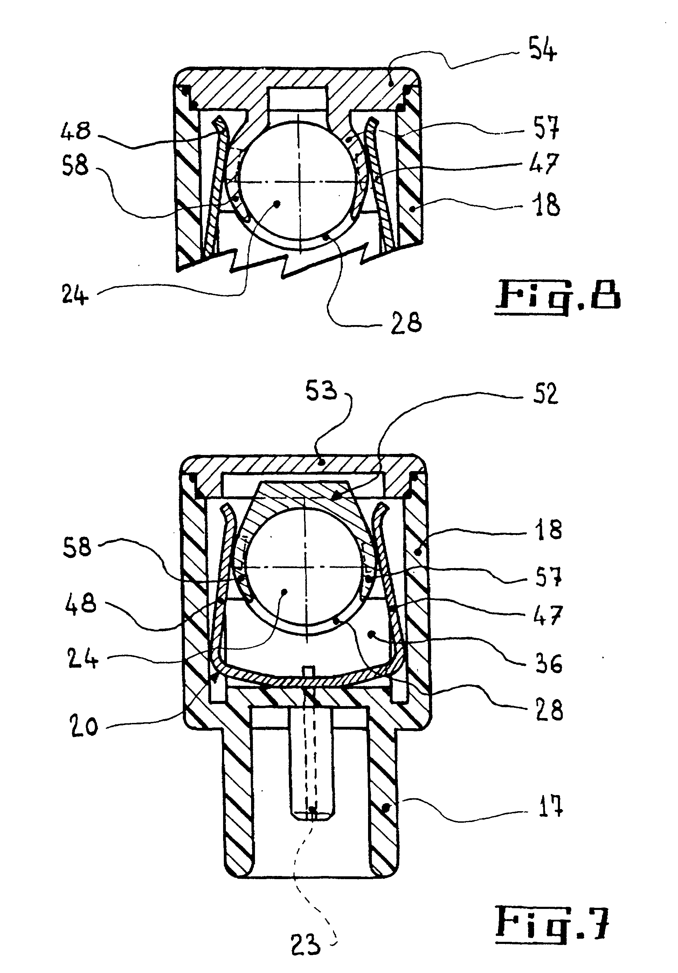

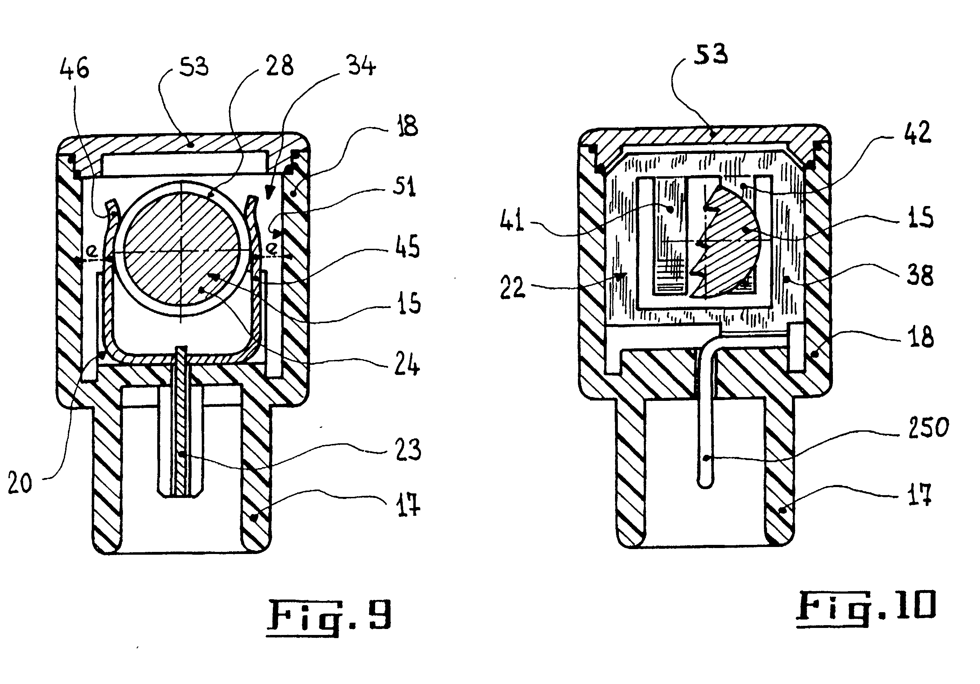

. Figure 6 montre comment cette figure 5 est modifiée dans le cas de la variante selon Figure 4 ;
. Figure 7 est une coupe transversale du module de la figure 3 réalisée sensiblement selon VII-VII de Figure 5 ;
. Figure 8 montre comment cette figure 7 est modifiée dans le cas de la variante selon Figure 4 ;
. Figure 9 est une coupe transversale du module selon Figure 3, réalisée selon IX-IX de Figure 5 ; et
. Figure 10 est une coupe transversale de ce même module, réalisée selon X-X de Figure 5.

En se référant tout d'abord aux figures 3, 5, 7, 9, et 10, il s'agit d'un module de protection 14 qui est prévu pour recevoir un parafoudre ou "parasurtension" tripolaire du commerce 15 et pour venir s'enficher sur une bague de protection réceptrice 2 d'un module d'interconnexion de lignes téléphoniques tel que le module 1 selon Figure 1.

Cette bague 2 se compose d'un corps isolant 9 et de trois contacts-lyre dont deux contacts de ligne latéraux 11,12 et un contact de masse médian 10.

Ce nouveau module 14 comporte un corps 16 en matière plastique isolante rigide, dont la partie inférieure 17 est creuse et est conçue pour s'enficher fermement sur la partie mâle conjuguée que forme la partie supérieure 19 du corps 9 de la bague 2, et dont la partie supérieure 18 est également creuse et forme réceptâcle à section ici horizontale et rectangulaire pour le parasurtension 15.

Ce réceptâcle 18 contient un contact élastique de masse médian 20 et deux contacts élastiques de ligne 21,22 qui présentent tous trois une patte inférieure verticale rigide, respectivement 23, 124, et 250, ces trois pattes traversant le corps 16 pour venir respectivement s'enficher, lorsque la partie femelle 17 est en place sur sa partie mâle conjuguée 19, dans les contacts-lyre 10 à 12. Les contacts de ligne 21 et 22 sont disposés de part et d'autre du contact de masse 20, et de manière symétrique par rapport au plan transversal médian 61 de celui-ci.

Les parasurtensions tripolaires peuvent être de dimensions et de modèles légèrement différents. Il peut par exemple s'agir, comme c'est le cas pour le parasurtension 15, d'un parafoudre dont le corps cylindrique extérieurement isolant 24 est garni d'une électrode de masse annulaire métallique et médiane 28 qui est très en relief par rapport à ce cylindre 24 et de deux électrodes de ligne 25,26 recouvrant respectivement les deux faces transversales d'extrémité du cyclindre 24 et présentant chacune une forme de coupelle métallique creuse ayant donc un renfoncement central 27. Il peut aussi s'agir, comme désigné par la référence 29 sur la figure 4, d'un parafoudre dont le corps cylindrique extérieurement isolant 30 est garni d'une électrode de masse annulaire métallique et médiane 31 qui n'est que très peu en relief et de deux électrodes de ligne 32 et 33 recouvrant respectivement les deux faces transversales d'extrémité du cylindre 30 et présentant chacune une forme de coupelle métallique à fond rigoureusement plat.

Les dimensions intérieures du réceptâcle 18 sont légèrement supérieures aux dimensions extérieures moyennes d'un parasurtension du commerce, tels que par exemple les parasurtensions classiques 30 et 15. Pour fixer les idées, par rapport à un parasurtension 30 du commerce, dont la longueur est d'environ 10 millimètres pour un diamètre de 8 millimètres, la cavité intérieure 34 du réceptacle 18 laissera, une fois ce parasurtension centré dans cette cavité, environ 3 millimètres de part et d'autre dans le sens longitudinal et environ 2 millimètres de part et d'autre dans le sens transversal, ce qui laisse royalement la place pour d'autres modèles de parasurtensions, de plus grandes dimensions.

Cette cavité réceptrice 34 est réalisée bien plus profonde qu'il est simplement nécessaire pour recevoir un parasurtension, afin de pouvoir donner aux contacts 20,21,22 une hauteur suffisante pour obtenir une bonne élasticité de leurs lames de contact. Afin d'éviter que le parasurtension ne tombe dans le fond de cette cavité 34, d'où il serait très difficile à extraire, il est prévu, de moulage avec le bloc plastique 16, au moins deux arceaux de retenue 35,36 qui sont proéminents dans le fond de la cavité 34 et qui forment berceau isolant pour le parasurtension.

Chaque contact métallique de ligne 21,22 comporte une partie supérieure formée par un cadre, respectivement 37 et 38, qui lui même porte deux lamelles de contact, respectivement 39,40 et 41,42, élastiques et légèrement protubérantes en direction de la partie interne de la cavité 34 qui les reçoit contre ses petites faces latérales ici verticales.

Ces deux lamelles élastiques ont chacune une largeur de l'ordre de 2 millimètres, et sont écartées l'une de l'autre d'environ 2 millimètres. Dans le cas où l'on utilise un parasurtension tel que le parasurtension 15 dont les électrodes de ligne 25 sont en forme de coupelle avec un creux central 27, on est ainsi assuré que les deux lamelles élastiques 39,40 viennent appuyer contre la périphérie annulaire 43 de cette électrode 25 : ce contact 21 convient donc pour les deux types, 15 et 29, de parasurtension. En outre, le fait de prévoir deux lamelles d'appui 39,40 par contact au lieu d'une seule engendre une meilleure répartition des zones d'appui et par suite une meilleure capacité d'écoulement en ondes de courant.

Le contact métallique élastique de connexion de masse 20 est très particulier. Sa partie supérieure, qui est prévue pour reposer sur le fond de la cavité 34, a une forme de berceau composé d'un fond rigide 44 ici horizontal et bordé, dans le sens longitudinal, par deux ensembles identiques, ici verticaux, de trois bras élastiques et très légèrement écartés l'un de l'autre, dont un bras médian, respectivement 45 et 46, et deux bras latéraux, respectivement 47,48 et 49,50, qui sont placés, dans le sens longitudinal, de part et d'autre de ce bras médian.

En coupe transversale au niveau des deux bras médians 45,46 et de la patte médiane inférieure 23, ce contact élastique 20 a une forme de fourchette, comme on le voit en particulier sur la figure 9. Comme illustré sur cette figure 9, ces deux bras médians élastiques 45,46 sont prévus pour former une pince qui vient emprisonner étroitement l'électrode de masse 28 du parasurtension 15 ou l'électrode de masse 31 du parasurtension 29.

Afin d'accepter des parasurtensions du commerce de différents diamètres, chaque ensemble de trois bras 47,45,49 et 48,46,50 laisse, une fois le parasurtension 15 ou 29 en place dans le réceptâcle 19 (figure 9), de chaque coté un espace de battement e de l'ordre de 1,5 à 2 millimètres par rapport à la paroi interne la plus proche 51 de la cavité réceptrice 34.

Les deux bras latéraux, respectivement 47,49 et 48.50, ne sont pas des contacts de masse à proprement parler, mais des contacts de sécurité thermique par mise en court-circuit du parasurtension en cas de fonctionnement de celui-ci par suite d'un coup de foudre sur la ligne ou d'un contact prolongé entre une ligne basse tension et une ligne téléphonique.

Il est, selon un moyen général maintenant bien connu, prévu une cale isolante 52 en matière plastique thermofusible qui est normalement intercalée entre chacun de ces bras métalliques et reliés à la masse 47 à 50 et les deux électrodes de ligne 26 et 25, ou 32 et 33 du parasurtension 15 ou 29. Lorsque le parasurtension vient à fonctionner, la température élevée à laquelle son corps est portée fait fondre la matière de la cale 32, de sorte que les bras 47 à 50 viennent en contact électrique avec les électrodes de ligne du parasurtension, ce qui court-circuite celui-ci.

Dans le cas de la présente réalisation, la cale thermofusible 52 comporte quatre pattes rigides et isolantes 57 à 60 qui sont respectivement prévues pour s'intercaler entre les pattes élastiques et métalliques 47 à 50. En outre, les pattes métalliques 47 et 48 sont prévues pour, en l'absence de leurs cales isolantes respectives d'écartement 57 et 58, venir en contact électrique avec une électrode de ligne 25 ou 32 du parasurtension 15 ou 29, et de même façon les pattes métalliques 49 et 50 sont prévues pour, en l'absence de leurs cales isolantes respectives d'écartement 59 et 60, venir en contact électrique avec l'autre électrode de ligne 26 ou 33 du parasurtension 15 ou 29.

Il est enfin prévu pour ce module 14 un couvercle de fermeture 53 en matière plastique rigide, des moyens étant bienentendu prévus pour assurer l'étanchéité de la fermeture.

Ces moyens d'étanchéité peuvent être très variés, et à la portée de l'homme de métier. Pour la réalisation selon les figures 5,7,9, et 10, il est par exemple prévu d'assurer le maintien et l'étanchéité du couvercle par un procédé classique de soudure à ultra-sons. Il est aussi possible, à l'instar du couvercle spécial 54 selon la figure 4 et qui sera décrit ci-après, de munir ce couvercle 53 de pattes d'enclipsage 55,56 sur le réceptacle 18, et d'assurer l'étanchéité par un remplissage de la cavité 34 à l'aide d'un produit d'étanchéité à base de Silicone.

En se référant aux figures 4,6, et 8, il est aussi possible de réaliser en un seul bloc la cale 52 et le couvercle 53, pour obtenir le couvercle 54 qui comporte les quatre pattes d'écartement précitées 57 à 60 intégrées d'une seule pièce au couvercle de fermeture de la cavité 34.

Comme il va de soi, l'invention n'est pas limitée à l'exemple de réalisation qui vient d'être décrit, mais peut être réalisée par utilisation de divers moyens équivalents. Par exemple, il n'est pas exclu de réaliser les trois contacts métalliques élastiques 20 à 22 en une seule pièce.

## Revendications

1. Module de protection enfichable sur la bague de protection réceptrice (2) d'un module (1) d'interconnexion rapide de lignes téléphoniques, cette bague (2) présentant trois bornes (10,11,12) de connexion, par enfichage, à ce module de protection (14) dont une borne de masse (10) de deux bornes de ligne (11,12), ce module de protection (14) contenant un parafoudre ou "parasurtension" (15) tripolaire de corps (24) cylindrique et pourvu d'une électrode métallique de masse (28) médiane et annulaire et de deux électrodes métalliques de ligne (25,26) formant les deux faces transversales respectives d'extrémité du cylindre, et étant conçu pour s'enficher sur cette bague réceptrice (2) de manière à connecter électriquement alors respectivement les deux électrodes d'extrémités (25,26) du parasurtension (15) aux deux bornes de ligne (11,12) et l'électrode annulaire médiane (28) de ce parasurtension à la borne de masse (10), **caractérisé :**
. **en ce qu'**il comporte, dans un réceptâcle (18) de réception du parasurtension (15), trois contacts métalliques élastiques (21,20,22) dont un contact médian de connexion de masse (20) dont la section transversale a une forme de fourchette (23,46,45) à deux dents (46,45) qui est prévue pour recevoir, entre ces deux dents (46,45), l'électrode de masse annulaire médiane (28) du parasurtension (15), et deux contacts de connexion de ligne (21,22) qui sont respectivement positionnés de part et d'autre de ce contact de masse (20) et symétriquement par rapport au plan transversal médian (61) de celui-ci, chacun de ces deux contacts étant prévu pour prendre appui, de manière élastique, respectivement contre les deux électrodes de ligne (25,26) du parasurtension (15),
. **en ce que** ledit réceptâcle (18) est de dimensions intérieures légèrement supérieures aux dimensions moyennes d'un parasurtension du commerce (15,29), de telle sorte que, compte tenu du débattement permis par l'élasticité de ces trois contacts élastiques (21,20,22), ce réceptacle (18) est apte à recevoir des parasurtensions du commerce dont les dimensions extérieures peuvent être légèrement différentes de l'un à l'autre,
. **en ce que** ledit contact élastique médian de connexion de masse (20) a une forma de berceau qui comporte, dans le sens longitudinal parallèle à l'axe du parasurtension (15) et de part et d'autre de chacune des deux pattes élastiques de connexion de masse (45,46) qui forment les deux dents de ladite fourchette (23,45,46), respectivement deux pattes métalliques élastiques supplémentaires (47,49 et 48, 50,) qui sont conformées pour venir respectivement prendre appui sur chacune des deux électrodes de ligne (25,26) du parasurtension (15), une cale isolante (52) en matériau thermofusible étant en outre prévue pour venir s'insérer entre chacune de ces quatre pattes élastiques supplémentaires (47 à 50) et le corps (24) du parasurtension (15) afin de normalement ménager un intervalle électriquement isolant entre chaque patte supplémentaire (47,48-49,50) et son électrode de ligne conjuguée (25,26) du parasurtension, cet intervalle d'isolement venant à être supprimé lorsque, le parasurtension (15) venant de fonctionner, cette cale isolante (57 à 60) fond alors sous l'effet de la chaleur, et
. **en ce que** cette cale thermofusible (52) comporte quatre pattes de calage (57,58,59,60) qui sont respectivement aptes à venir s'encastrer, lorsque cette cale (52) est mise en place, entre chacune desdites pattes métalliques élastiques supplémentaires (47,48,49,50).

2. Module de protection selon la revendication 1, **caractérisé en ce que** cette cale thermofusible (57 à 60) est intégrée d'un seul bloc au couvercle (54) de fermeture dudit réceptacle (18).

3. Module de protection enfichable selon la revendication 1, **caractérisé en ce que** chacun de ces deux contacts élastiques de ligne (21, 22) comporte deux lamelles élastiques de contact (39,40) qui sont écartées l'une de l'autre et conformées pour prendre appui sur la partie périphérique (43) de la face transversale métallique d'extrémité (25) du cylindre formé par le corps (24) du parasurtension (15), c'est-à-dire sur la partie périphérique (43) de la face transversale de l'électrode de ligne correspondante (25) du parasurtension (15), de sorte que ce réceptâcle (18) peut recevoir aussi bien des parasurtensions du commerce (29), pour lesquelles cette face transversale métallique d'extrémité est rigoureusement plane (32) que des parasurtensions du commerce (15) pour lesquels cette face transversale métallique d'extrémité possède une partie centrale creuse (27).

4. Module de protection selon l'une des revendications 1 à 3, **caractérisé en ce que** la cavité réceptrice (34) dudit réceptacle (18) est réalisée bien plus profonde qu'il est simplement nécessaire pour recevoir un parasurtension (15,29) afin de pouvoir donner aux contacts (20,21,22) une hauteur suffisante pour obtenir une bonne élasticité de leurs lames de contact (39 à 42, 45 à 50), et **en ce que**, afin d'éviter que le parasurtension (15,29) ne tombe dans le fond de cette cavité (34), il est prévu au moins deux arceaux de retenue (35,36) qui sont proéminents par rapport au fond de cette cavité (34) et qui forment berceau récepteur isolant pour le parasurtension (15,29).

## Patentansprüche

1. Schutzmodul, das auf den Aufnahmeschutzring (2) eines Moduls (1) zur schnellen Durchschaltung von Telefonleitungen aufsteckbar ist, wobei dieser Ring (2) drei Steckklemmen (10, 11, 12) zur Verbindung mit diesem Schutzmodul (14) aufweist, von denen die eine eine Masseklemme (10) und die anderen zwei Leitungsklemmen (11, 12) sind, wobei dieses Schutzmodul (14) einen dreipoligen, einen zylindrischen Körper (24) aufweisenden Blitzableiter oder Überspannungsableiter (15) umfasst und eine zentrische und ringförmige, metallische Masseelektrode (28) und zwei, die jeweiligen transversalen Endflächen des Zylinders bildende metallische Leitungselektroden (25, 26) aufweist und derart ausgebildet ist, dass er auf diesen Aufnahmering (2) derart aufsteckbar ist, dass dann jeweils die zwei Endelektroden (25, 26) des Überspannungsableiters (15) mit den zwei Leitungsklemmen (11, 12) und die zentrische, ringförmige Elektrode (28) dieses Überspannungsableiters mit der Masseklemme (10) elektrisch verbunden werden, **dadurch gekennzeichnet,**
. **dass** er in einem Aufnahmebehälter (18) des Überspannungsableiters (15) drei elastische metallische Kontakte (21, 20, 22) umfasst, von denen der mittlere ein Masseverbinderkontakt (20) ist, dessen Querschnitt die Form einer Gabel (23, 46, 45) mit zwei Zinken (46, 56) zur Aufnahme zwischen diesen beiden Zinken (46, 45) der mittleren ringförmigen Masseelektrode (28) des Überspannungsableiters (15), und die zwei Leitungsverbinderkontakte (21, 22) jeweils auf einer der beiden Seiten dieses Massekontaktes (20) symmetrisch zur zentralen, transversalen Ebene (61) desselben angeordnet sind, wobei jeder dieser beiden Kontakte sich elastisch jeweils gegen die zwei Leitungselektroden (25, 26) des Überspannungsableiters (15) abstützen soll,
. **dass** die inneren Maße des Behälters (18) leicht größer sind, als die mittleren Maße eines handelsüblichen Überspannungsableiters (15, 29), so dass, aufgrund des durch die Elastizität dieser drei elastischen Kontakte (21, 20, 22) ermöglichten Spiels, dieser Behälter (18) handelsübliche Überspannungsableiter aufnehmen kann, deren äußere Maße vom einen zum anderen leicht variieren können,
. **dass** der mittlere elastische Masseverbinderkontakt (20) die Form eines Korbs aufweist, der, in Längsrichtung parallel zur Achse des Überspannungsableiters (15) und auf beiden Seiten jeder der beiden, die zwei Zinken der Gabel (23, 45, 46) bildenden elastischen Masseverbinderlaschen (45, 46) jeweils zwei zusätzliche elastische metallische Laschen (47, 49 und 48, 50) umfasst, die derart ausgebildet sind, dass sie jeweils auf jeder der beiden Leitungselektroden (25, 26) des Überspannungsableiters (15) aufliegen, wobei außerdem ein isolierendes Passstück (52), das aus einem unter Hitze schmelzbaren Material besteht, vorgesehen ist, das dann zwischen jeder der vier zusätzlichen elastischen Laschen (47 bis 50) und dem Körper (24) des Überspannungsableiters (15) eingefügt wird, damit normalerweise ein elektrisch isolierender Abstand zwischen jeder zusätzlichen Lasche (47, 48 - 49, 50) und seiner Konjugationsleitungselektrode (25, 26) des Überspannungsableiters freigelassen wird, wobei dieser Isolierabstand dann aufgehoben wird, wenn, sobald der Überspannungsableiter (15) in Betrieb gerät, dieses isolierende Passstück (57 bis 60) unter der Hitzeeinwirkung schmilzt und
. **dass** dieses Passstück (52), das aus einem unter Hitze schmelzbaren Material besteht, vier Keilstücke (57, 58, 59, 60) umfasst, die jeweils dazu geeignet sind, beim Positionieren des Passstücks (52), zwischen jede der zusätzlichen, elastischen metallischen Laschen (47, 48, 49, 50) eingesetzt zu werden.

2. Schutzmodul nach Anspruch 1, **dadurch gekennzeichnet, dass** dieses Passstück (57 bis 60), das aus einem unter Hitze schmelzbaren Material besteht, einstückig mit dem Verschlussdeckel (54) des Behälters (18) ausgebildet ist.

3. Steckbares Schutzmodul nach Anspruch 1, **dadurch gekennzeichnet, dass** jeder dieser beiden elastischen Leitungskontakte (21, 22) zwei beabstandete, elastische Kontaktlamellen (39, 40) umfasst, die derart ausgebildet sind, dass sie auf dem Umfangsbereich (43) der transversalen metallischen Endfläche (25) des durch den Körper (24) des Überspannungsableiters (15) gebildeten Zylinders, das heißt auf dem Umfangsbereich (43) der transversalen Fläche der entsprechenden Leitungselektrode (25) des Überspannungsableiters (15) aufliegen, so dass dieser Behälter (18) sowohl handelsübliche Überspannungsableiter (29), für welche diese transversale metallische Endfläche absolut eben (32) ist, als auch handelsübliche Überspannungsableiter (15), für welche diese transversale metallische Endfläche einen hohlen Mittelteil (27) aufweist, aufnehmen kann.

4. Schutzmodul nach einem der Ansprüche 1 bis 3, **dadurch gekennzeichnet, dass** der Aufhahmehohlraum (34) des Behälters (18) viel tiefer ausgeführt ist, als zur Aufnahme eines Überspannungsableiters (15, 29) einfach nötig ist, damit die Kontakte (20, 21, 22) mit einer Höhe versehen werden können, die ausreichend ist, um eine gute Elastizität ihrer Kontaktmesser (39 bis 42, 45 bis 50) zu erzielen; und dass wenigstens zwei Festhaltebögen (35, 36) vorgesehen sind, die aus dem Boden dieses Hohlraums (34) herausragen und einen isolierenden Aufnahmekorb für den Überspannungsableiter (15, 29) bilden, wodurch verhindert wird, dass der Überspannungsableiter (15, 29) in diesen Hohlraum (34) hineinfällt.

## Claims

1. Plug-in protection module on the protection ring (2) receiving a rapid interconnection module (1) for telephone lines, this ring (2) presenting three terminals (10, 11, 12) for connection, by plugging, to this protection module (14), including one earth terminal (10) and two line terminals (11, 12), this protection module (14) containing a three-pole lightning or overvoltage arrester (15) with cylindrical body (24) and provided with a median annular metallic earth electrode (28) and with two metallic line electrodes (25, 26) forming the two respective transverse end faces of the cylinder, and being designed to be plugged on this receiving ring (2) so as electrically to connect the two end electrodes (25, 26) of the overvoltage arrester (15) respectively to the two line terminals (11, 12) and the median annular electrode (28) of this overvoltage arrester to the earth terminal (10), **characterized:**
- **in that** it comprises, in a receptacle (18) for receiving the overvoltage arrester (15), three elastic metal contacts (21,20,22), including a median earth connection contact (20) whose transverse section presents the form of a fork (23, 46, 45) with two tines (46, 45) which is provided to receive, between these two tines (46, 45), the median annular earth electrode (28) of the overvoltage arrester (15), and two line connection contacts (21, 22) which are respectively positioned on either side of this earth contact (20) and symmetrically with respect to the median transverse plane (61) thereof, each of these two contacts being provided to elastically abut respectively against the two line electrodes (25, 26) of the overvoltage arrester (15),
- **in that** said receptacle (18) presents inner dimensions slightly greater than the average dimensions of an overvoltage arrester available on the market (15, 29), with the result that, taking into account the clearance allowed by the elasticity of these three elastic contacts (21, 20, 22), this receptacle (18) is able to receive commercially available overvoltage arresters whose outer dimensions may be slightly different from one another,
- **in that** said median elastic earth connection contact (20) is in the form of a cradle which comprises, in the longitudinal direction parallel to the axis of the overvoltage arrester (15) and on either side of each of the two elastic earth connection lugs (45, 46) which form the two tines of said fork (23, 45, 46), respectively two additional elastic metal lugs (47, 49 and 48, 50) which are shaped in order respectively to abut on each of the two line electrodes (25, 26) of the overvoltage arrester (15), an insulating wedge (52) made of thermofusible material being further provided to be inserted between each of these four additional elastic lugs (47 to 50) and the body (24) of the overvoltage arrester (15), in order normally to form an electrically insulating gap between each additional lug (47, 48 - 49, 50) and its conjugated line electrode (25, 26) of the overvoltage arrester, this insulating gap being eliminated when, the overvoltage arrester (15) having just been operated, this insulating wedge (57 to 60) then melts under the effect of the heat, and
- **in that** this thermofusible wedge (52) comprises four adjusting tabs (57, 58, 59, 60) which are respectively able to fit, when said wedge (52) is positioned, between each of said additional elastic metal lugs (47, 48, 49, 50).

2. Protection module according to claim 1, **characterized in that** this insulating wedge (57 to 60) is integrated integral with the cover (54) for closing said receptacle (18).

3. Plug-in protection of module according to claim 1, **characterized in that** each of these two line connection contacts (21, 22) comprises two elastic contact strips (39, 40) which are spaced apart from each other and shaped to abut on the peripheral portion (43) of the metallic transverse end face (25) of the cylinder formed by the body (24) of the overvoltage arrester (15), i.e. on the peripheral portion (43) of the transverse face of the corresponding line electrode (25) of the overvoltage arrester (15), so that this receptacle (18) may receive both commercially available overvoltage arresters (29) for which this metallic transverse end face is strictly flat (32) and commercially available overvoltage arresters (15) for which this metallic transverse end face presents a hollow central portion (27).

4. Protection module according to any one of claims 1 to 3, **characterized in that** the receiving cavity (34) of said receptacle (18) is made much deeper than is simply necessary for receiving an overvoltage arrester (15, 29) in order to be able to give to contacts (20, 21, 22) a sufficient height to obtain a good elasticity of their contact strips (39 to 42, 45 to 50), and **in that** there are provided in order to avoid the overvoltage arrester (15, 29) falling in the bottom of this cavity (34), at least two retaining bows (35, 36) which are prominent with respect to the bottom of this cavity (34) and which form an insulating receiving cradle for the overvoltage arrester (15, 29).
